# EUROPEAN PATENT APPLICATION

(11) **EP 4 068 224 A2**
(43) Date of publication of application: **05.10.2022**
(21) Application number: 22189018.9
(22) Date of filing: 05.08.2022
(51) Int. Cl.: G06V 20/54, G06V 10/82, G06V 10/44, G06T 7/20

(54) **METHOD AND APPARATUS OF RECOGNIZING IMAGE, ELECTRONIC DEVICE, AND STORAGE MEDIUM**

(30) Priority: 06.08.2021 CN 202110905424
(71) Applicant: BEIJING BAIDU NETCOM SCIENCE TECHNOLOGY CO., LTD., No. 10 Shangdi 10th Street Haidian District Beijing 100085 (CN)
(72) Inventor: DU, Yuting, Beijing, 100085 (CN); LIU, Yalei, Beijing, 100085 (CN); DAI, Xu, Beijing, 100085 (CN); SUN, Mengyao, Beijing, 100085 (CN)
(74) Representative: Stöckeler, Ferdinand

(57) **Abstract**

The present disclosure provides a method of recognizing an image, which relates to a field of an artificial intelligence technology, in particular to a field of image recognition. A specific implementation solution includes: recognizing a plurality of target object groups of different categories from an image to be recognized; intercepting an area of each target object group from the image to be recognized, so as to obtain a target image of the each target object group; recognizing a number of at least one target object in the each target object group from the target image of the each target object group; and generating a scheduling information for the each target object group according to the category of the each target object group and the number of the at least one target object in the each target object group. The present disclosure further provides an apparatus of recognizing an image, an electronic device, and a storage medium.

## Description

### TECHNICAL FIELD

The present disclosure relates to a field of an artificial intelligence technology, in particular to an image recognition technology. More specifically, the present disclosure provides a method and an apparatus of recognizing an image, an electronic device, and a storage medium.

### BACKGROUND

With a continuous development of Internet and the artificial intelligence technology, automatic calculation and analysis are involved in more and more fields. For example, by recognizing a target object from an image of a scene, a number of the target object may be determined.

### SUMMARY

The present disclosure provides a method and an apparatus of recognizing an image, an electronic device, and a storage medium.

According to a first aspect, a method of recognizing an image is provided, including: recognizing a plurality of target object groups of different categories from an image to be recognized; intercepting an area of each target object group from the image to be recognized, so as to obtain a target image of the each target object group; recognizing a number of at least one target object in the each target object group from the target image of the each target object group; and generating a scheduling information for the each target object group according to the category of the each target object group and the number of the at least one target object in the each target object group.

According to a second aspect, an apparatus of recognizing an image is provided, including: a first recognition module configured to recognize a plurality of target object groups of different categories from an image to be recognized; an interception module configured to intercept an area of each target object group from the image to be recognized, so as to obtain a target image of the each target object group; a second recognition module configured to recognize a number of at least one target object in the each target object group from the target image of the each target object group; and a generation module configured to generate a scheduling information for the each target object group according to the category of the each target object group and the number of the at least one target object in the each target object group.

According to a third aspect, an electronic device is provided, including: at least one processor; and a memory communicatively connected to the at least one processor, wherein the memory stores instructions executable by the at least one processor, and the instructions, when executed by the at least one processor, cause the at least one processor to implement the method provided according to the present disclosure.

According to a fourth aspect, a non-transitory computer-readable storage medium having computer instructions therein is provided, and the computer instructions are configured to cause a computer to implement the method provided according to the present disclosure.

According to a fifth aspect, a computer program product containing a computer program is provided, and the computer program, when executed by a processor, causes the processor to implement the method provided according to the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows an exemplary scene in which a method and an apparatus of recognizing an image may be applied according to an embodiment of the present disclosure;
FIG. 2 shows a flowchart of a method of recognizing an image according to an embodiment of the present disclosure;
FIG. 3 shows a schematic diagram of a method of recognizing an image according to an embodiment of the present disclosure;
FIG. 4A to FIG. 4B show flowcharts of a method of generating a scheduling information according to embodiments of the present disclosure;
FIG. 5 shows a block diagram of an apparatus of recognizing an image according to an embodiment of the present disclosure; and
FIG. 6 shows a block diagram of an electronic device for implementing a method of recognizing an image according to an embodiment of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

With an acceleration of smart city, a control of various non-motor vehicles at an urban road intersection has become particularly important. For example, a dense arrangement of shared bicycles at the urban road intersection has become a difficult problem in an urban management. At present, there is no reasonable scheduling basis for a release number and a placement area of shared bicycles.

In the technical solution of the present disclosure, the collection, storage, use, processing, transmission, provision, disclosure, and application of user personal information involved comply with provisions of relevant laws and regulations, take essential confidentiality measures, and do not violate public order and good custom.

In the technical solution of the present disclosure, authorization or consent is obtained from the user before the user's personal information is obtained or collected.

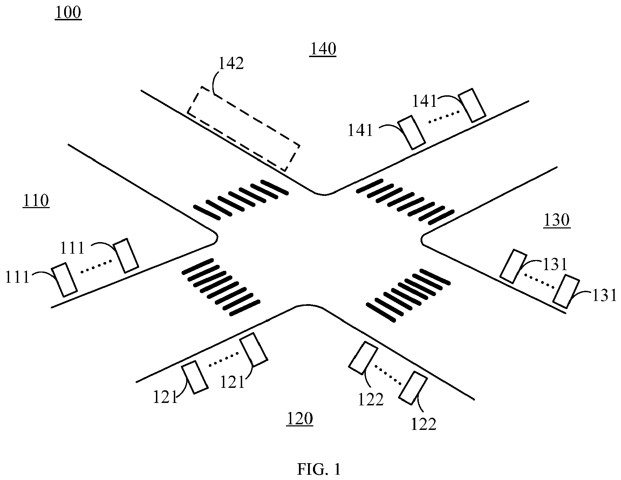

FIG. 1 shows an exemplary scene in which a method and an apparatus of recognizing an image may be applied according to an embodiment of the present disclosure. It should be noted that FIG. 1 is only an example of a scene in which embodiments of the present disclosure may be applied, so as to help those skilled in the art understand the technical content of the present disclosure, but it does not mean that embodiments of the present disclosure may not be used in other environments or scenes.

As shown in FIG. 1, a scene 100 according to this embodiment includes a road intersection 110, a road intersection 120, a road intersection 130, and a road intersection 140. Each road intersection may be used to park various non-motor vehicles. For example, a plurality of non-motor vehicles 111 are parked at the road intersection 110, a plurality of non-motor vehicles 121 and a plurality of non-motor vehicles 122 are parked at the road intersection 120, a plurality of non-motor vehicles 131 are parked at the road intersection 130, and a plurality of non-motor vehicles 141 are parked at the road intersection 140. The non-motor vehicles may include, for example, shared bicycles, ordinary bicycles, tricycles, electric bicycles, etc.

Each road intersection may be provided with a forbidden area. For example, the road intersection 140 is provided with a forbidden area 142, in which parking of non-motor vehicles is prohibited.

A category and a number of non-motor vehicle parked at each road intersection may be recognized through an image of the scene 100, and a scheduling information may be generated according to the recognized category and number of non-motor vehicle. The scheduling information may indicate that the number of non-motor vehicle of a certain category exceeds a release standard, or that a non-motor vehicle of a certain category is parked in the forbidden area, etc., so as to alarm a corresponding supply manufacturer or an urban road manager according to these scheduling information. Then the supply manufacturer or the urban road manager may reasonably schedule the release number and parking area of the non-motor vehicle according to an alarm information, so that a distribution of the non-motor vehicle may be more standardized and an intelligence of the urban management may be improved.

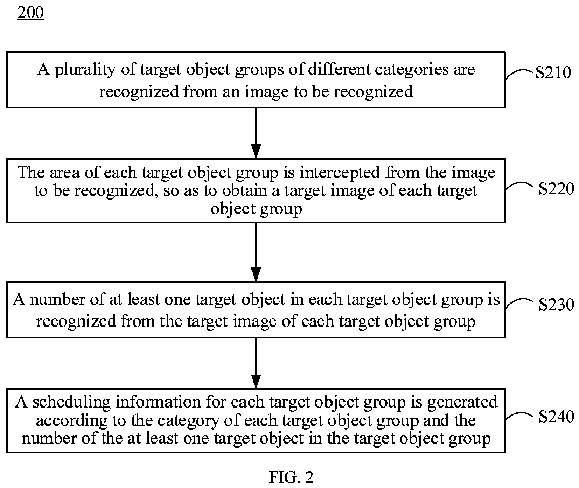

FIG. 2 shows a flowchart of a method of recognizing an image according to an embodiment of the present disclosure.

As shown in FIG. 2, a method 200 of recognizing an image may include operations S210 to S240.

In operation S210, a plurality of target object groups of different categories are recognized from an image to be recognized.

For example, the image to be recognized may be an image of a road intersection, which may be obtained by de-framing a video stream. Specifically, a video stream for the road intersection may be segmented into frames, for example, segmented every Is, and a plurality of frames of images obtained by segmentation may serve as the image to be recognized. It should be noted that the video stream in this embodiment may be acquired from a public data set, or the acquisition of the video stream is authorized by a corresponding user.

The plurality of target object groups may be of different categories, for example, the plurality of target object groups may include a plurality of non-motor vehicle groups of different product types, such as a shared bicycle group, an ordinary bicycle group, a tricycle group, etc.

The plurality of target object groups may also include a plurality of non-motor vehicle groups of the same product type but from different manufacturers, such as a shared bicycle group of manufacturer A, a shared bicycle group of manufacturer B, and a shared bicycle group of manufacturer C.

For example, the image to be recognized may be an image of a road intersection, which may contain shared bicycle groups of a plurality of manufacturers. The image to be recognized may be input into an image segmentation model to obtain a manufacturer category of each shared bicycle group and an area of each shared bicycle group in the image to be recognized. The area of each shared bicycle group in the image to be recognized may be identified by coordinates or by a marker box.

The image segmentation model may be a convolutional neural network for target detection and segmentation, such as Mask RCNN (Mask Regions with Convolutional Neural Network).

In operation S220, the area of each target object group is intercepted from the image to be recognized, so as to obtain a target image of each target object group.

For example, the plurality of target object groups may include shared bicycle groups of a plurality of manufacturers. The area of each shared bicycle group may be intercepted from the image to be recognized according to the coordinates or marker box of the area of each shared bicycle group in the image to be recognized, and serve as the target image of each shared bicycle group.

In operation S230, a number of at least one target object in each target object group is recognized from the target image of each target object group.

For example, the plurality of target object groups may include shared bicycle groups of a plurality of manufacturers. The target image of each shared bicycle group may be input into a target counting network to obtain the number of at least one shared bicycle in each shared bicycle group.

The target counting network may be a convolutional neural network for target counting, such as VGG (Visual Geometry Group) series of networks, including VGG16 and VGG19.

In operation S240, a scheduling information for each target object group is generated according to the category of each target object group and the number of the at least one target object in the target object group.

For example, the plurality of target object groups may include shared bicycle groups of a plurality of manufacturers. If there is a limit on the number of shared bicycle at the road intersection in the image to be recognized, it may be determined whether the number of shared bicycle in each shared bicycle group exceeds a corresponding threshold. If the number of shared bicycle in a shared bicycle group exceeds the corresponding threshold, a first scheduling information for the shared bicycle group may be generated. The first scheduling information may include the category (manufacturer) of the shared bicycle group and the number, so as to send an alarm to the corresponding manufacturer to prompt that the shared bicycle group released by the manufacturer exceeds a standard, and prompt the number exceeding the standard.

If a forbidden area in which parking of shared bicycle is prohibited is provided for the road intersection in the image to be recognized, then for the target image of each shared bicycle group, it may be identified whether the target image contains the forbidden area. If the target image of a shared bicycle group contains the above-mentioned forbidden area, a second scheduling information for the shared bicycle group may be generated. The second scheduling information may include the manufacturer category of the shared bicycle group and an indication information indicating that the shared bicycle group released by the manufacturer is parked in the forbidden area, and may further include the number of shared bicycle of the manufacturer parked in the forbidden area, so as to send an alarm to the corresponding manufacturer to prompt the manufacturer to transfer the shared bicycle in the forbidden area to a non-forbidden area.

According to embodiments of the present disclosure, the category of each target object group and the number are recognized from the image to be recognized to improve a recognition accuracy of the target object, and the scheduling information for each target object group is generated according to the category and the number, so that the distribution of each target object group may be more standardized and the intelligence of urban management may be improved.

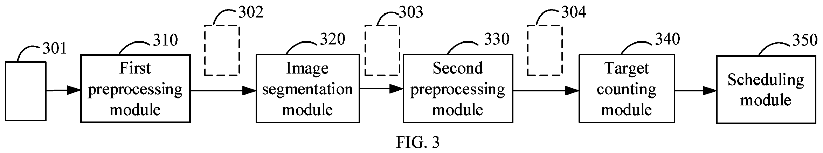

FIG. 3 shows a schematic diagram of a method of recognizing an image according to another embodiment of the present disclosure.

As shown in FIG. 3, the schematic diagram of the method of recognizing the image contains a first preprocessing module 310, an image segmentation module 320, a second preprocessing module 330, a target counting module 340, and a scheduling module 350. A process of recognizing an image is as follows.

For example, an image to be recognized 301 is an image of a road intersection, and shared bicycle groups of a plurality of manufacturers are contained in the image to be recognized 301. The image to be recognized 301 is input into the first preprocessing module 310, and the first preprocessing module 310 performs preprocessing on the image to be recognized 301. For example, the first preprocessing module 310 scales the image to be recognized 301 to a fixed size (for example, 800 ^{∗} 800) and performs a normalization (for example, divides a pixel value by 255), then subtracts a mean value (for example, if the image to be recognized is an RGB three channel image, a mean value [0.485, 0.456, 0.406] is subtracted from the normalized pixel value), and divides a result by a variance (such as [0.229, 0.224, 0.225]). After the above preprocessing, a first preprocessed image 302 is obtained, in which each pixel has a value between 0 and 1.

The first preprocessed image 302 is input into the image segmentation module 320, which may include a convolutional neural network (such as Mask RCNN network)-based image segmentation model. Since the value of each pixel in the first preprocessed image 302 is between 0 and 1, the first preprocessed image 302 may be directly input into the image segmentation model. The image segmentation model may recognize the first preprocessed image 302, and the manufacturer category of each shared bicycle group and the coordinates of the area of each shared bicycle group in the image to be recognized may be output. The coordinates of the area of each shared bicycle group in the image to be recognized may include coordinates of a top left corner and coordinates of a bottom right corner of the area, according to which a rectangular box for the area of the shared bicycle group may be determined. According to the rectangular box for the area of each shared bicycle group, the area of each shared bicycle group may be intercepted to obtain a target image 303 of each target object group.

The target image 303 of each target object group is input into the second preprocessing module 330, and the second preprocessing module 330 performs preprocessing on the target image 303. For example, the second preprocessing module 330 scales the target image 303 to a fixed size (such as a rectangle with a minimum edge of not less than 512 and a maximum edge of not more than 2048) and performs a normalization (for example, divides the pixel value by 255), then subtracts a mean value (such as [0.485, 0.456, 0.406]) and divides a result by a variance (such as [0.229, 0.224, 0.225]). After the above preprocessing, a second preprocessed image 304 is obtained, in which each pixel has a value between 0 and 1.

The second preprocessed image 304 is input into the target counting module 340, which may include a convolutional neural network (such as VGG19 network)-based target counting model. Since the value of each pixel in the second preprocessed image 304 is between 0 and 1, the second preprocessed image 304 may be directly input into the target counting model. The target counting model may recognize the second preprocessed image 304 and outputs a probability density map of each shared bicycle group, which may reflect a distribution density of the shared bicycle group. For each shared bicycle group, the number of all pixels in the probability density map of the shared bicycle group is summed, and a result is the number of shared bicycle in the shared bicycle group.

The category of each shared bicycle group and the number of shared bicycle in each shared bicycle group are input to the scheduling module 350, and the scheduling module 350 may generate the scheduling information for each shared bicycle group to standardize the distribution of each shared bicycle group.

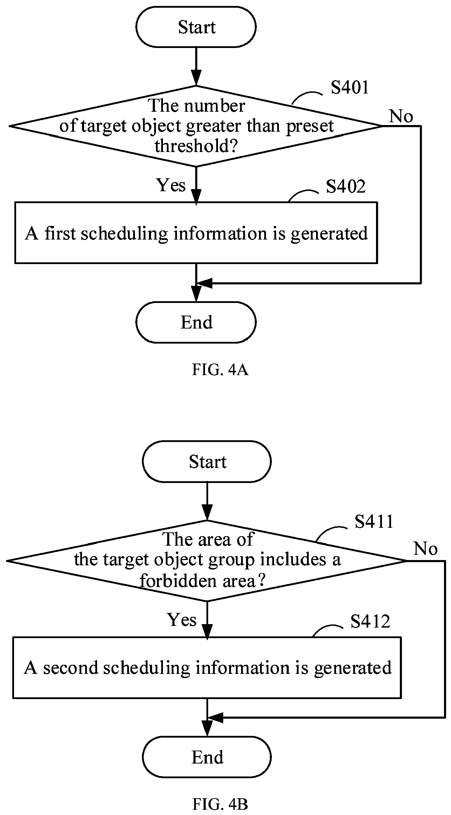

FIG. 4A to FIG. 4B show flowcharts of a method of generating a scheduling information according to embodiments of the present disclosure.

As shown in FIG. 4A, the method includes operations S401 to S402.

In operation S401, for each category of target object group, it is determined whether the number of target object in the target object group is greater than a preset threshold. If so, operation S402 is performed. Otherwise, the process ends.

In operation S402, a first scheduling information for the target object group is generated.

For example, if there is a limit on the release number of shared bicycle at the road intersection in the image to be recognized, it is determined whether the number of shared bicycle in each shared bicycle group exceeds a corresponding threshold. If the number of shared bicycle in a shared bicycle group exceeds the corresponding threshold, a first scheduling information for the shared bicycle group may be generated. The first scheduling information includes the manufacturer category of the shared bicycle group and the number, so as to send an alarm to the corresponding manufacturer to prompt that the shared bicycle group released by the manufacturer exceeds the standard, and further prompt the number exceeding the standard.

As shown in FIG. 4B, the method includes operations S411 to S412.

In operation S411, for each category of target object group, it is determined whether the area of the target object group includes a forbidden area.

In operation S412, a second scheduling information for the target object group is generated.

For example, if a forbidden area in which parking of shared bicycle is prohibited is provided for the road intersection in the image to be recognized, then for the target image of each shared bicycle group, it may be identified whether the target image contains the forbidden area. If the target image of a shared bicycle group contains the above-mentioned forbidden area, a second scheduling information for the shared bicycle group may be generated. The second scheduling information may include the manufacturer category of the shared bicycle group and the indication information indicating that the shared bicycle group released by the manufacturer is parked in the forbidden area, and may further include the number of shared bicycle of the manufacturer parked in the forbidden area, so as to send an alarm to the corresponding manufacturer to prompt the manufacturer to transfer the shared bicycle in the forbidden area to a non-forbidden area.

According to embodiments of the present disclosure, the scheduling information generated according to the recognized category and number of non-motor vehicle may indicate that the number of non-motor vehicle of a certain category exceeds the release standard, or indicate that the non-motor vehicle of a certain category is parked in a forbidden area, etc., so as to alarm the corresponding release manufacturer or urban road manager. Then, the release manufacturer or urban road manager may reasonably schedule the release number and parking area of the non-motor vehicle according to the alarm information, so that the distribution of non-motor vehicle may be more standardized and the intelligence of urban management may be improved.

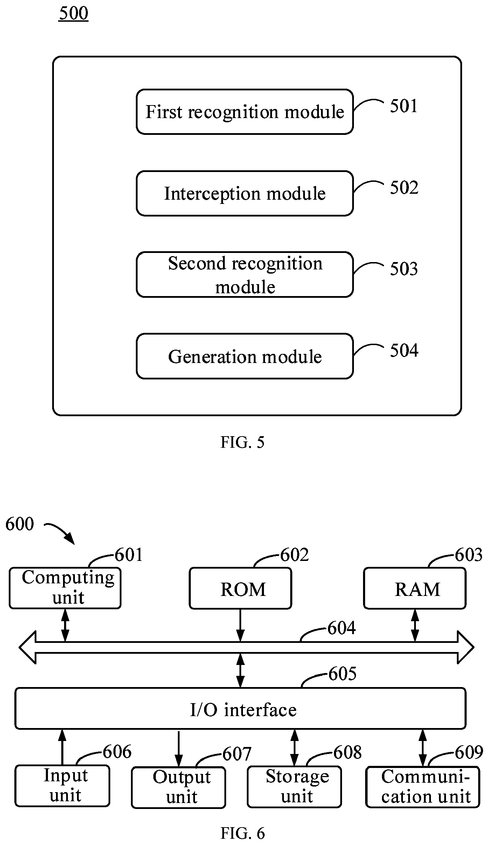

FIG. 5 shows a block diagram of an apparatus of recognizing an image according to an embodiment of the present disclosure.

As shown in FIG. 5, an apparatus 500 of recognizing an image may include a first recognition module 501, an interception module 502, a second recognition module 503, and a generation module 504.

The first recognition module 501 is used to recognize a plurality of target object groups of different categories from the image to be recognized.

The interception module 502 is used to intercept an area of each target object group from the image to be recognized, so as to obtain a target image of the each target object group.

The second recognition module 503 is used to recognize a number of at least one target object in the each target object group from the target image of the each target object group.

The generation module 504 is used to generate a scheduling information for the each target object group according to the category of the each target object group and the number of the at least one target object in the each target object group.

According to embodiments of the present disclosure, the generation module 504 includes a first generation unit and a second generation unit.

The first generation unit is used to generate a first scheduling information for the target object group in response to the number of the at least one target object in the target object group being greater than a preset threshold.

The second generation unit is used to generate a second scheduling information for the target object group in response to the area of the target object group including a forbidden area.

According to embodiments of the present disclosure, the first recognition module 501 is used to input the image to be recognized into an image segmentation model to obtain the category of each target object group and coordinates of the area of each target object group in the image to be recognized.

According to embodiments of the present disclosure, the interception module 502 is used to intercept the area of each target object group from the image to be recognized according to the coordinates.

According to embodiments of the present disclosure, the second recognition module 503 includes a first recognition unit and a second recognition unit.

The first recognition unit is used to input the target image of each target object group into a target counting model to obtain a probability density map of each target object group.

The second recognition unit is used to determine the number of the at least one target object in each target object group according to the probability density map of each target object group.

According to embodiments of the present disclosure, the second recognition unit is used to sum, for the probability density map of each target object group, a number of pixels in the probability density map, so as to obtain the number of the at least one target object in the target object group.

According to embodiments of the present disclosure, the present disclosure further provides an electronic device, a readable storage medium, and a computer program product.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the device 600 may also be stored. The computing unit 601, the ROM 602, and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or a dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and processing described above, such as the method of recognizing an image. For example, in some embodiments, the method of recognizing an image may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of recognizing an image. Alternatively, in other embodiments, the computing unit 601 may be configured to execute the method of recognizing an image by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-described specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of recognizing an image, comprising:
recognizing (S210) a plurality of target object groups of different categories from an image to be recognized (301);
intercepting (S220) an area of each target object group from the image to be recognized (301), so as to obtain a target image (303) of the each target object group;
recognizing (S230) a number of at least one target object in the each target object group from the target image (303) of the each target object group; and
generating (S240) a scheduling information for the each target object group according to the category of the each target object group and the number of the at least one target object in the each target object group.

2. The method (200) according to claim 1, wherein the generating (S240) a scheduling information for the each target object group according to the category of the each target object group and the number of the at least one target object in the each target object group comprises: for the target object group of each category,
generating (S402) a first scheduling information for the target object group in response to the number of the at least one target object in the target object group being greater than a preset threshold.

3. The method (200) according to claim 1 or 2, wherein the generating (S240) a scheduling information for the each target object group according to the category of the each target object group and the number of the at least one target object in the each target object group comprises: for the target object group of each category,
generating (S412) a second scheduling information for the target object group in response to the area of the target object group comprising a forbidden area (142).

4. The method (200) according to any one of claims 1 to 3, wherein the recognizing (S210) a plurality of target object groups of different categories from an image to be recognized (301) comprises:
inputting the image to be recognized (301) into an image segmentation model to obtain the category of the each target object group and coordinates of the area of the each target object group in the image to be recognized (301).

5. The method (200) according to any one of claims 1 to 4, wherein the recognizing (S230) a number of at least one target object in the each target object group from the target image (303) of the each target object group comprises:
inputting the target image (303) of the each target object group into a target counting model to obtain a probability density map of the each target object group; and
determining the number of the at least one target object in the each target object group according to the probability density map of the each target object group.

6. The method (200) according to claim 5, wherein the determining the number of the at least one target object in the each target object group according to the probability density map of the each target object group comprises:
summing, for the probability density map of the each target object group, a number of pixel in the probability density map, so as to obtain the number of the at least one target object in the target object group.

7. An apparatus (500) of recognizing an image, comprising:
a first recognition module (501) configured to recognize a plurality of target object groups of different categories from an image to be recognized;
an interception module (502) configured to intercept an area of each target object group from the image to be recognized, so as to obtain a target image of the each target object group;
a second recognition module (503) configured to recognize a number of at least one target object in the each target object group from the target image of the each target object group; and
a generation module (504) configured to generate a scheduling information for the each target object group according to the category of the each target object group and the number of the at least one target object in the each target object group.

8. The apparatus (500) according to claim 7, wherein the generation module (504) comprises:
a first generation unit configured to generate a first scheduling information for the target object group in response to the number of the at least one target object in the target object group being greater than a preset threshold.

9. The apparatus (500) according to claim 7 or 8, wherein the generation module (504) comprises:
a second generation unit configured to generate a second scheduling information for the target object group in response to the area of the target object group comprising a forbidden area.

10. The apparatus (500) according to any one of claims 7 to 9, wherein the first recognition module (501) is further configured to input the image to be recognized into an image segmentation model to obtain the category of the each target object group and coordinates of the area of the each target object group in the image to be recognized.

11. The apparatus (500) according to any one of claims 7 to 10, wherein the second recognition module (503) comprises:
a first recognition unit configured to input the target image of the each target object group into a target counting model to obtain a probability density map of the each target object group; and
a second recognition unit configured to determine the number of the at least one target object in the each target object group according to the probability density map of the each target object group.

12. The apparatus (500) according to claim 11, wherein the second recognition unit is further configured to: sum, for the probability density map of the each target object group, a number of pixel in the probability density map, so as to obtain the number of the at least one target object in the target object group.

13. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 6.

14. A non-transitory computer-readable storage medium having computer instructions therein, wherein the computer instructions are configured to cause a computer to implement the method according to any one of claims 1 to 6.

15. A computer program product containing a computer program, wherein the computer program, when executed by a processor, causes the processor to implement the method according to any one of claims 1 to 6.
